Europäisches Patentamt

European Patent Office

Office européen des brevets

(11) Veröffentlichungsnummer: 0 167 898
A2

## (12) EUROPÄISCHE PATENTANMELDUNG

(21) Anmeldenummer: 85107608.3

(22) Anmeldetag: 20.06.85

(51) Int. Cl.⁴: G 06 K 19/08

(30) Priorität: 05.07.84 CH 3261/84

(43) Veröffentlichungstag der Anmeldung:
15.01.86 Patentblatt 86/3

(84) Benannte Vertragsstaaten:
AT BE CH DE FR GB IT LI LU NL SE

(71) Anmelder: AUTELCA AG
Worbstrasse 187
CH-3073 Gümligen(CH)

(72) Erfinder: Meloni, Mario
Breichtenstrasse 13
CH-3074 Muri(CH)

(72) Erfinder: Schaepman, Ellert
Susenbergstrasse 120
CH-8044 Zürich(CH)

(74) Vertreter: EGLI-EUROPEAN PATENT ATTORNEYS
Horneggstrasse 4
CH-8008 Zürich(CH)

(54) Datenträger mit einer Datenspur für sequentielle Daten und Verfahren zu dessen Herstellung.

(57) Auf dem Datenträger (1) weist eine Datenspur (3) für sequentielle Daten mindestens zwei Arten von Bereichen (7, 8) mit als Impedanz messbaren Eigenschaften auf, die sich voneinander nach der magnetischen Permeabilität oder nach der elektrischen Leitfähigkeit des Materials und daher im Wert der magnetischen oder elektrischen Impedanz unterscheiden. Je nachdem sind die einen Bereiche (7) ferromagnetisch oder leitend und die anderen Bereiche (8) nicht- oder weniger ferromagnetisch beziehungsweise nicht- oder weniger leitend. Es können beide Fälle kombiniert werden. Zwischen zwei unterschiedlichen Bereichen (7, 8) kann eine progressive Uebergangszone (9) liegen, in welcher die Impedanz kontinuierlich variiert. Auf der Datenspur (3) kann eine Deckschicht (4) vorgesehen werden, die elektrisch leitend ist, wenn die Datenspur nach der magnetischen Impedanz lesbar ist, und ferromagnetisch ist, wenn die Datenspur nach der elektrischen Impedanz lesbar ist. Die Datenspur (3) und auch die Deckschicht (4) können durch Auftragen mindestens einer Suspension auf eine Unterlage (2) des Datenträgers (1) erzeugt werden.

FIG.4

EP 0 167 898 A2

Datenträger mit einer Datenspur für sequentielle Daten und
Verfahren zu dessen Herstellung

Die Erfindung betrifft einen Datenträger mit einer Datenspur
für sequentielle Daten, die als Sicherheitsmerkmal auf Wert-,
Kredit- und Zutrittskarten verwendbar sind, sowie ein Verfahren zur Herstellung eines derartigen Datenträgers.

Die meisten Sicherheitssysteme, welche die missbräuchliche
Herstellung oder Regenerierung von Wert-, Kredit- oder Zu-
·trittskarten verhindern sollen, beruhen darauf, dass diese
Karten mit einem Merkmal versehen werden, welches nur mit
grossem technischen Aufwand und Wissen und mit sehr teuren
Einrichtungen nachgeahmt oder kopiert werden kann. Je höher
der zu schützende Geldwert liegt, je mehr Verbreitung die
Karten einer bestimmten Sorte finden und je grösser die Zahl
der mit einer Karte erhältlichen Dienstleistungen ist, desto
stärker wird der Anreiz zu betrügerischen Manipulationen und
desto höher muss die Sicherheitsschwelle des gewählten
Sicherheitssystems liegen. Bei unpersönlichen Wertkarten muss
in der Karte selbst ein Sicherheitsmerkmal eingebaut werden,
welches mit hoher Sicherheit das Kopieren einer neuen Karte
oder die Regeneration einer aufgebrauchten Karte verhindert.
Wirtschaftlich zu berücksichtigen sind dabei nicht nur die
Höhe der Sicherheitsschwelle, sondern auch die damit verbundenen Mehrkosten zur Herstellung der Karte. Eines der bestgeeigneten Sicherheitsmerkmale, die in Wertkarten eingebaut
werden, besteht in auf einer Datenspur gespeicherten Daten,
die - gegebenenfalls getarnt oder chiffriert - auf der Wertkarte vorliegen, von der Sicherheitsvorrichtung jedoch lesbar
und interpretierbar sind und ihr die Kontrolle der Wertkarte
ermöglichen.

Aus dem Patentdokument FR-2463475 sind ein Datenträger mit
einer Magnetspur für darin sequentiell codierte unveränderbare Daten sowie ein Verfahren zur Herstellung dieses Datenträgers bekannt. Nach diesem Verfahren wird zunächst eine
übliche Magnetspur der beispielsweise auf Wert-, Kredit- und
Identifikationskarten verwendeten Art auf einen entsprechenden Datenträger aufgetragen. Dann wird eine nichtmagnetische
Schicht von variabler Dicke auf die Magnetspur aufgetragen
und in diese eingepresst, um die Eigenschaften der Magnetspur
stellenweise, der variablen Dicke der eingepressten Schicht
entsprechend, zu ändern. Diese Aenderung der Eigenschaften
kann nicht rückgängig gemacht werden und besteht im wesentlichen darin, dass die Tiefe der Magnetspur unter der Oberfläche des Datenträgers und gegebenenfalls die Dicke der Magnetspur stellenweise jeweils einen ersten oder einen zweiten
Wert aufweisen, und zwar nach einem vorbestimmten Code. Die
Eigenschaften der Magnetspur sind also durch das Herstellungsverfahren gemäss einer binären Logik stellenweise und
endgültig beeinflusst worden, so dass ein Ablesen der Magnetspur mit geeigneten Mitteln den vorbestimmten Code erzeugt.
Der damit verfolgte Zweck ist, unveränderbare Daten auf dem
Datenträger zu speichern, beispielsweise zur Identifikation
von Personalien des Inhabers, zur Kontrolle einer Zustrittsbewilligung und dergleichen.

Für dieses bekannte Verfahren wird eine präzise und vorzugsweise geheizte Presse benötigt. Das Verfahren ist also aufwendig und kann nicht mit einfachen Mitteln an beliebigem Ort
ausgeübt werden. Der mit diesem bekannten Verfahren hergestellte Datenträger weist den Nachteil auf, dass der gespeicherte Code entweder unmittelbar optisch oder zumindest mit
einfachen Mitteln lesbar und daher nachahmbar ist.

Das Einbetten der Magnetspur zwischen dem Datenträger und
einer nichtmagnetischen Schutzschicht ist aus dem genannten
Patentdokument FR-2463475 oder auch aus dem Patentdokument US-4058839 bekannt. Diese Massnahme löst das Problem nicht,
dass der gespeicherte Code unmittelbar optisch oder zumindest
mit einfachen Mitteln lesbar und daher nachahmbar ist.
Das Einbetten der Magnetspur zwischen dem Datenträger und
einer nichtmagnetischen Schutzschicht von variabler Dicke ist
aus dem Patentdokument JP-54-123921 bekannt. Diese Massnahme
bezweckt, Unregelmässigkeiten der Magnetspur durch entsprechende Variationen der Dicke der Schutzschicht zu kompensieren und dadurch unter anderen den Verschleiss zu reduzieren.
Nicht nur löst also diese Massnahme das Problem nicht, dass
der gespeicherte Code entweder unmittelbar optisch oder zumindest mit einfachen Mitteln lesbar und daher nachahmbar
ist; die Zielsetzung dieser Massnahme ist, die einwandfreie
Lesbarkeit der Magnetspur zu sichern, diese Zielsetzung ist
somit der Lösung des gestellten Problems geradezu gegensätzlich.

Es ist nun Aufgabe der Erfindung, einen Datenträger und ein
Verfahren der eingangs erwähnten Art zu schaffen, mit welchen
die genannten Nachteile vermieden werden. Zur Lösung dieser
Aufgabe wird der erfindungsgemässe Datenträger gekennzeichnet
durch die im Erzeugnisanspruch angegebene Kombination von
Merkmalen, und das erfindungsgemässe Verfahren wird gekennzeichnet durch die im Verfahrensanspruch angegebene Kombination von Verfahrensschritten. Vorteilhafte Weiterbildungen
des Datenträgers und des Verfahrens ergeben sich aus den
abhängigen Ansprüchen.

Die Erfindung wird nachstehend unter Bezugnahme auf die
Zeichnungen näher beschrieben. Es zeigen:

Fig. 1    eine schematische Darstellung einer ersten Ausbildung des erfindungsgemässen Datenträgers, im
          Schnitt;

Fig. 2     eine schematische Darstellung einer zweiten Ausbildung des erfindungsgemässen Datenträgers, im
           Schnitt;

Fig. 3     eine schematische Darstellung der Impedanz der
           Datenspur in einer Ausbildung des erfindungsgemässen Datenträgers nach Fig. 1 oder 2;

Fig. 4     eine schematische Darstellung einer dritten Ausbildung des erfindungsgemässen Datenträgers, im
           Schnitt;

Fig. 5     eine schematische Darstellung der magnetischen
           Impedanz der Ausbildung des erfindungsgemässen
           Datenträgers nach Fig. 4.

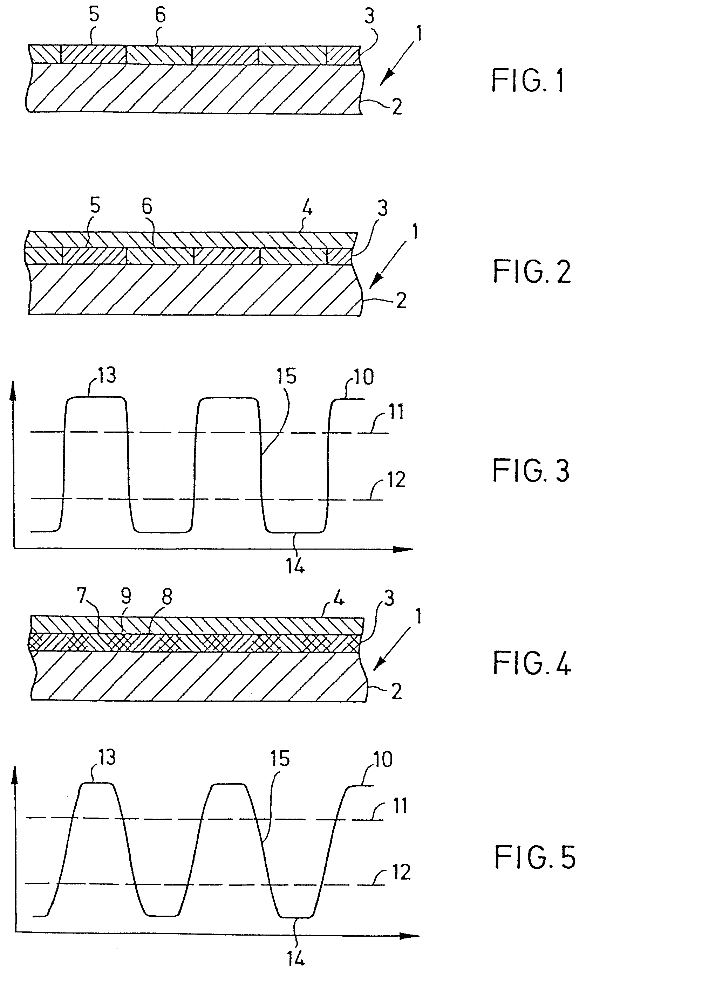

Einander entsprechende Teile des Datenträgers werden in allen
Figuren mit gleichen Bezugszeichen versehen. In einer in Fig.
1 dargestellten Ausbildung umfasst ein allgemein mit 1 bezeichneter Datenträger eine Unterlage 2 beispielsweise aus
Kunststoff und beispielsweise in der Gestalt einer Wert-,
Kredit- oder Zutrittskarte zur Verwendung im Zusammenhang mit
einer entsprechenden Vorrichtung wie einem Wertkarten-, Kreditkarten- und Zutrittsautomaten. Auf der Unterlage 2 ist
eine Datenspur 3 aufgetragen, die nachstehend näher beschrieben wird. In Fig. 2 wird eine Ausbildung dargestellt, bei
welcher in gleicher Art wie in Fig. 1 ein allgemein auch mit
1 bezeichneter Datenträger eine Unterlage 2 umfasst, auf die
eine Datenspur 3 aufgetragen ist. In der Ausbildung nach Fig.
2 ist aber im Gegensatz zur Ausbildung nach Fig. 1 zumindest
auf der Datenspur 3 und gegebenenfalls auf dem gesamten
Datenträger eine Deckschicht 4 aufgetragen, die nachstehend
näher beschrieben wird.

Die Datenspur 3 weist Bereiche mit unterschiedlichen elektromagnetischen Eigenschaften auf. In Fig. 1 und 2 sind zwei Arten von jeweils mit den Bezugzeichen 5 und 6 bezeichneten Bereichen klar voneinander abgegrenzt, während in Fig. 4 der Uebergang zwischen den beiden Arten von Bereichen progressiv statt abrupt erfolgt und die eigentlichen Bereiche zur besseren Unterscheidung jeweils mit den Bezugzeichen 7 und 8, die progressive Uebergangszone zwischen den Bereichen mit dem Bezugzeichen 9 bezeichnet werden. Die elektromagnetische Eigenschaft, nach der sich die Bereiche 5 und 6 beziehungsweise 7 und 8 unterscheiden, kann die magnetische Permeabilität oder die elektrische Leitfähigkeit sein, so dass die Datenspur 3 mit einem mit Wechselstrom gespeisten Lesekopf lesbar ist, der einem Lesekopf der für Tonbänder oder Disketten bekannten Art ähnlich sein kann. In beiden Fällen unterscheiden sich die Bereiche 5 und 6 beziehungsweise 7 und 8 voneinander durch den Wert ihrer Impedanz gegenüber dem Lesekopf, welche Impedanz im einen Fall eine magnetische, im anderen Fall eine elektrische Impedanz ist. Der Lesekopf reagiert im einen Fall auf Aenderungen des Magnetflusses in der Datenspur 3, im anderen Fall auf Aenderungen der durch Wirbelströme verursachte Energieverluste in der Datenspur 3. Es kann als unterscheidungskräftige Eigenschaft auch eine Kombination der magnetischen Permeabilität und der elektrischen Leitfähigkeit verwendet werden, auch dann unterscheiden sich die Bereiche 5 und 6 beziehungsweise 7 und 8 voneinander durch den Wert ihrer Impedanz gegenüber dem Lesekopf, welche Impedanz in diesem Fall sowohl eine magnetische als auch eine elektrische Impedanz ist.

In den vom Lesekopf erfassbaren Impedanzänderungen sind die Daten enthalten, die in der Datenspur gespeichert und von der dem Datenträger entsprechenden Vorrichtung zu verarbeiten sind. Wenn die Datenspur 3 zwischen zwei Bereichen unterschiedlicher Art 7, 8 eine progressive Uebergangszone 9 aufweist, kann der Wert der magnetischen Impedanz, der elektrischen Impedanz oder sowohl der magnetischen als auch der
elektrischen Impedanz kontinuierlich von der jeweiligen Impedanz der einen Art von Bereichen 7 bis zur jeweiligen Impedanz der anderen Art von Bereichen 8 variieren.

In Fig. 3 und 5 sind jeweils auf der Ordinate eines schematischen Diagramms die lokal erfasste Impedanz der Datenspur 3
als Funktion einer entlang der Abszisse aufgetragenen Längsrichtung der Datenspur aufgetragen, wobei die Daten von der
dem Datenträger entsprechenden Vorrichtung entlang der Längsrichtung der Datenspur sequentiell lesbar sind. Fig. 3 entspricht der Impedanz einer Ausbildung der Datenspur 3 nach
Fig. 1 oder 2, Fig. 5 entspricht der Impedanz einer Ausbildung der Datenspur 3 nach Fig. 4. Unter "lokal erfasster
Impedanz" ist diejenige Impedanz zu verstehen, die in einer
gegeneben Lage des Datenträgers von einem zum Lesen der
Datenspur geeigneten Lesekopf der entsprechenden Vorrichtung
erfasst wird, wobei die Impedanz wie vorangehend beschrieben
eine magnetische oder eine elektrische Impedanz oder eine
Kombination von beiden Impedanzarten sein kann. Im Diagramm
ist also eigentlich eine Kennlinie 10 der Mittelwerte der
Impedanz über einen Längsbereich von einigen Hundertstel mm
bis einigen mm je nach der Ausführung des Datenträgers und
des Lesekopfes der entsprechenden Vorrichtung dargestellt.
Auf der Ordinate des Diagramms sind ein oberer Toleranzwert
11 und ein unterer Toleranzwert 12 dargestellt. Wenn die
Impedanz grösser ist als der Toleranzwert 11, wie beispielsweise im Bereich 13 der Kennlinie, entspricht dies einem
vorgegebenen binären Wert, beispielsweise einer "1". Wenn die
Impedanz kleiner ist als der Toleranzwert 12, wie beispielsweise im Bereich 14 der Kennlinie, entspricht dies dem gegenteiligen binären Wert, beispielsweise einer "0". Wenn die
Impedanz zwischen den beiden Toleranzwerten 11 und 12 liegt,
wie beispielsweise im Bereich 15 der Kennlinie, entspricht
dies keinem binären Wert. In einer Variante kann ein ternäres
Zahlensystem verwendet werden, in welchem beispielsweise dem Bereich 13 eine "1", dem Bereich 14 eine "0" und dem Bereich 15 eine "2" zugeordnet werden kann. Grundsätzlich können, in Weiterbildung dieser Variante, quaternäre oder noch höhere Zahlensysteme verwendet werden.

Wie aufgrund der abrupten Uebergänge zwischen den Bereichen der Datenspur 3 in den Ausbildungen nach Fig. 1 oder 2 oder aufgrund der progressiven Uebergänge in der Ausbildung nach Fig. 4 zu erwarten war, zeigt die Kennlinie 10 in Fig. 3 abrupte, in Fig. 5 progressive Wertänderungen der Impedanz längs der Datenspur 3. Wenn also Uebergangszonen 9 zwischen den Bereichen unterschiedlicher Art 7, 8 vorgesehen sind, variiert der Wert der Impedanz jeweils kontinuierlich von der Impedanz der einen Art von Bereichen 7 bis zur Impedanz der anderen Art von Bereichen 8. In der entsprechenden Vorrichtung erfolgt die Signalverarbeitung zumindest unmittelbar nach dem Lesekopf nach Bedarf digital oder analog, den abrupten oder progressiven Uebergängen zwischen den beiden Extremwerten der Impedanz und auch dem verwendeten Zahlensystem entsprechend, was dem Fachmann beim gegenwärtigen Stand der Technik wohlbekannt ist.

Die Datenspur 3 umfasst wie erwähnt zwei Arten von Bereichen 5 und 6 beziehungsweise 7 und 8 sowie gegebenenfalls eine Uebergangszone 9. Sie ist als Schicht oder Kombination von Schichten ausgebildet.

Wenn die Bereiche sich voneinander durch ihre magnetische Impedanz unterscheiden sollen, bestehen die Bereiche der einen Art, beispielsweise die Bereiche 5 oder 7, aus einer Schicht, deren Material aus einer Suspension von ferromagnetischen Teilchen in einem Trägermaterial besteht. Die Bereiche der anderen Art, im gleichen Beispiel die Bereiche 6 oder 8, tragen dann in einer ersten Variante keine Schicht oder sie bestehen - zur besseren Tarnung der in der Datenspur gespeicherten Daten - aus einer Schicht, deren Material keine ferromagnetischen, sondern beispielsweise para- oder diamagnetische Teilchen enthält, die im gleichen Trägermaterial suspendiert sind. Als feine ferromagnetische Teilchen sind hier solche zu verstehen, deren mittlerer Durchmesser unterhalb 0,1 mm liegt, beispielsweise die in Tonbändern verwendeten Teilchen aus Eisenoxid, Chromoxid oder kolloidalem Eisen in der bei dieser Anwendung gebräuchlichen Grösse. Als feine nicht-ferromagnetische Teilchen sind hier solche zu verstehen, deren mittlerer Durchmesser in der gleichen Grössenordnung liegt wie der mittlere Durchmesser der vorstehend erwähnten ferromagnetischen Teilchen, damit letztere in allen ihren Eigenschaften mit Ausnahme ihrer magnetischen Eigenschaften in der Schicht simuliert werden; es können beispielsweise Aluminium, Aluminiumoxid, Magnesiumoxid, Siliciumdioxid und ähnliche Stoffe in geeigneter Pulverform verwendet werden. In einer anderen Variante bestehen die genannten Bereiche der anderen Art, wiederum im gleichen Beispiel die Bereiche 6 oder 8 - und wiederum zur besseren Tarnung der in der Datenspur gespeicherten Daten - aus einer Schicht, deren Material auch aus einer Suspension von ferromagnetischen Teilchen im gleichen Trägermaterial besteht, jedoch in einer anderen Konzentration der ferromagnetischen Teilchen als in der erstgenannten Art von Bereichen (im beschriebenen Beispiel die Bereiche 5 oder 7). Das Verhältnis der Konzentrationen der ferromagnetischen Teilchen in den beiden Arten von Bereichen wird so gewählt, dass ein resultierender Impedanzunterschied erfassbar ist. Mit gegenwärtigen Mitteln genügt ein Verhältnis von mindestens 2:1 dieser Anforderung; entsprechend dem Fortschritt der Technik kann auch ein kleineres Verhältnis in Betracht gezogen werden, was zur noch besseren Tarnung der in der Datenspur gespeicherten Daten beitragen würde.

Wenn die Bereiche sich voneinander durch ihre elektrische Impedanz unterscheiden sollen, bestehen die Bereiche der einen Art, beispielsweise die Bereiche 5 oder 7, aus einer Schicht, deren Material aus einer Suspension von leitenden
Teilchen in einem Trägermaterial besteht. Die Bereiche der
anderen Art. im gleichen Beispiel die Bereiche 6 oder 8,
tragen dann in einer ersten Variante keine Schicht oder sie
bestehen - zur besseren Tarnung der in der Datenspur gespeicherten Daten - aus einer Schicht, deren Material nichtleitende Teilchen enthält, die im gleichen Trägermaterial suspendiert sind, wobei diese Schicht im wesentlichen keine
elektrische Leitfähigkeit aufweist; hier kommt es darauf an,
dass in den leitenden Bereichen der Schicht die Teilchen
einander berühren und das Entstehen von Wirbelströmen ermöglichen, das heisst, die leitenden Teilchen müssen in der
Schicht in einer geeigneten Kombination von Grösse und Konzentration vorhanden sein, welche die gewünschte Leitfähigkeit gewährleistet. Auch die Form der Teilchen ist zu berücksichtigen, es können beispielsweise Späne statt Kügelchen
verwendet werden. Solche leitenden Schichten sind an sich
bekannt und werden in der Elektronik beispielsweise auf Leiterplatten oder in Hybridschaltungen angewendet, daher brauchen sie hier nicht näher beschrieben zu werden. In den im
wesentlichen nichtleitenden Bereichen kommt es auf einen
wesentlichen Unterschied der Leitfähigkeit gegenüber den
leitenden Bereichen an. Als nichtleitende Teilchen sind hier
solche zu verstehen, deren mittlerer Durchmesser in der gleichen Grössenordnung liegt wie der mittlere Durchmesser der
vorstehend erwähnten leitenden Teilchen, damit letztere in
allen ihren Eigenschaften mit Ausnahme ihrer elektrischen
Eigenschaften in der Schicht simuliert werden; es können
beispielsweise Aluminiumoxid, Magnesiumoxid, Siliciumdioxid
und ähnliche Stoffe in geeigneter Pulverform verwendet werden. In einer anderen Variante bestehen die genannten Bereiche der anderen Art, wiederum im gleichen Beispiel die Bereiche 6 oder 8 - und wiederum zur besseren Tarnung der in der
Datenspur gespeicherten Daten - aus einer Schicht, deren
Material auch aus einer Suspension von leitenden Teilchen im
gleichen Trägermaterial besteht, jedoch in einer anderen Konzentration der leitenden Teilchen als in der erstgenannten Art von Bereichen (im beschriebenen Beispiel die Bereiche 5 oder 7). Das Verhältnis der Konzentrationen der leitenden Teilchen in den beiden Arten von Bereichen wird so gewählt, dass ein resultierender Impedanzunterschied erfassbar ist. Mit gegenwärtigen Mitteln genügt ein Verhältnis von mindestens 2:1 dieser Anforderung; entsprechend dem Fortschritt der Technik kann auch ein kleineres Verhältnis in Betracht gezogen werden, was zur noch besseren Tarnung der in der Datenspur gespeicherten Daten beitragen würde.

Es ist möglich, zur Unterscheidung zwischen den Bereichen der Datenspur die magnetischen und die elektrischen Eigenschaften der Materialien der Schichten zu kombinieren. So können beispielsweise die einen Bereiche ferromagnetisch und nichtleitend, die anderen Bereiche paramagnetisch und leitend sein; dies kann beispielsweise durch Verwendung von Pulvern von Chrom- oder Eisenoxid einerseits, von Aluminium oder Kupfer andererseits erreicht werden.

Die beschriebenen Schichten können auf dem Datenträger als Pasten aufgestrichen oder als Suspension beispielsweise im Tampondruck aufgetragen werden. Es können dieser Suspension - zur besseren Tarnung der in der Datenspur gespeicherten Daten - Farbstoffe und gegebenenfalls andere Zusätze beigegeben werden, welche die genannten Bereiche optisch und gegebenenfalls physisch bezüglich ihrer Rauhheit, ihrer Härte und anderen derartigen mechanischen Eigenschaften gleich erscheinen lassen. Suspensionen ermöglichen ein sehr wirtschaftliches Auftragen in geringen aber gut regulierbaren, enge Toleranzgrenzen einhaltenden Mengen, insbesondere ermöglichen sie die Bildung von Uebergangszonen durch progressives Aendern der Zusammensetzung der Suspension von der einen Sorte zur anderen oder durch Ueberlappen von Bereichen, die durch Auftragen der einen und der anderen Sorte von Suspension gebildet werden.

Zur noch besseren Tarnung der in der Datenspur gespeicherten
Daten kann die Datenspur 3 wie erwähnt von einer Deckschicht
4 überdeckt werden, die einerseits undurchsichtig sein und
andererseits Unebenheiten der Datenspur ausgleichen kann.
Auch diese Deckschicht 4 kann als Paste oder Suspension und
gegebenenfalls im Tampondruck aufgetragen werden. Die Deckschicht 4 kann beispielsweise eine Magnetspur sein, wenn die
Datenspur nur aus elektrisch leitenden und nicht- oder weniger leitenden Bereichen besteht: die für die Daten nicht
bedeutsame Magnetspur tarnt also die darunterliegende, für
die Daten bedeutsame Datenspur, was den Fälscher oder Betrüger effizient irreleitet. In einem anderen Beispiel kann die
Deckschicht 4 eine elektrisch leitende oder wechselweise
leitende und nicht- oder weniger leitende Spur sein, wenn die
Datenspur nur aus ferromagnetischen und nicht- oder weniger
ferromagnetischen Bereichen besteht: die für die Daten nicht
bedeutsame, elektrisch wirksame Spur tarnt also die darunterliegende, für die Daten bedeutsame Datenspur, was den Fälscher oder Betrüger wiederum effizient irreleitet.

In einer anderen Tarnkombination kann die Dicke der Datenspur
3 mit oder ohne Deckschicht 4 bereichsweise variiert werden,
wobei die Dickenbereiche der Datenspur in keinem oder in einem irreleitendem Zusammenhang mit den für die Daten bedeutsamen Bereichen der Datenspur stehen.

Aus dem vorangehenden ist erkennbar, dass vom erfindungsgemässen Datenträger und vom erfindungsgemässen Verfahren zu
dessen Herstellung neue Möglichkeiten geschaffen werden, die
nicht nur zur verbesserten Codierung verwendbar sind, sondern
auch zur verbesserten Tarnung von Daten, die von Vorrichtungen zum Lesen von Datenträgern wie Wert-, Kredit- und
Zutrittskarten ausgewertet werden.

Patentansprüche

1.    Datenträger (1) mit einer Datenspur (3) für sequentielle
Daten, die als Sicherheitsmerkmal auf Wert-, Kredit- und Zutrittskarten verwendbar sind, dadurch gekennzeichnet, dass
die Datenspur (3) aus einem Material besteht, das mindestens
zwei Arten von Bereichen (5, 6; 7, 8) mit unterschiedlichen,
als Impedanz messbaren, elektromagnetischen Eigenschaften
aufweist.

2.    Datenträger nach Anspruch 1, dadurch gekennzeichnet,
dass das Material der Datenspur (3) aus der Mischung mindestens zweier Materialien besteht, von denen das eine ein
ferromagnetisches Material und das andere ein Trägermaterial
ist, und dass die genannten Arten von Bereichen (5, 6; 7, 8)
sich nach der Konzentration des ferromagnetischen Materials
im Material der Datenspur unterscheiden.

3. Datenträger nach Anspruch 1, dadurch gekennzeichnet, dass das Material der Datenspur (3) aus der Mischung mindestens zweier Materialien besteht, von denen das eine ein elektrisch leitendes Material und das andere ein Trägermaterial ist, und dass die genannten Arten von Bereichen (5, 6; 7, 8) sich nach der Konzentration des elektrisch leitenden Materials im Material der Datenspur unterscheiden.

4. Datenträger nach Anspruch 1, dadurch gekennzeichnet, dass die genannten Arten von Bereichen (5, 6; 7, 8) der Datenspur (3) sich voneinander nach der magnetischen Permeabilität des Materials der Datenspur und daher durch verschiedene Werte der magnetischen Impedanz unterscheiden, und dass mindestens die eine Art von Bereichen (5; 7) ferromagnetisch ist.

5. Datenträger nach Anspruch 1, dadurch gekennzeichnet, dass die genannten Arten von Bereichen (5, 6; 7, 8) der Datenspur (3) sich voneinander nach der elektrischen Leitfähigkeit des Materials der Datenspur und daher durch verschiedene Werte der elektrischen Impedanz unterscheiden, und dass mindestens die eine Art von Bereichen (5; 7) elektrisch leitend ist.

6. Datenträger nach den Ansprüchen 2 und 3, dadurch gekennzeichnet, dass die genannten Arten von Bereichen (5, 6; 7, 8) der Datenspur (3) sich voneinander gleichzeitig nach der Konzentration des ferromagnetischen Materials und nach der Konzentration des elektrisch leitenden Materials im Material der Datenspur und daher gleichzeitig durch verschiedene Werte der magnetischen und der elektrischen Impedanz unterscheiden.

7. Datenträger nach den Ansprüchen 4 und 5, dadurch gekennzeichnet, dass die genannten Arten von Bereichen (5, 6; 7, 8) der Datenspur (3) sich voneinander gleichzeitig nach der magnetischen Permeabilität und nach der elektrischen Leitfähigkeit des Materials der Datenspur und daher gleichzeitig durch verschiedene Werte der magnetischen und der elektrischen Impedanz unterscheiden.

8. Datenträger nach einem der Ansprüche 1 bis 7, dadurch gekennzeichnet, dass die Datenspur (3) zwischen zwei Bereichen unterschiedlicher Art (7, 8) eine progressive Uebergangszone (9) aufweist, in welcher der Wert mindestens einer genannten Impedanz kontinuierlich vom Wert der genannten Impedanz in der einen Art von Bereichen (7) bis zum Wert der genannten Impedanz in der anderen Art von Bereichen (8) variiert.

9. Datenträger nach einem der Ansprüche 2 und 4, dadurch gekennzeichnet, dass mindestens auf der nach der magnetischen Impedanz lesbaren Datenspur (3) eine elektrisch leitende Deckschicht (4) vorgesehen ist.

10. Datenträger nach einem der Ansprüche 3 und 5, dadurch gekennzeichnet, dass mindestens auf der nach der elektrischen Impedanz lesbaren Datenspur (3) eine ferromagnetische Deckschicht (4) vorgesehen ist.

11. Verfahren zum Herstellen eines Datenträgers nach Anspruch 1, dadurch gekennzeichnet, dass mindestens die Datenspur (3) durch Auftragen mindestens einer Suspension auf eine Unterlage (2) des Datenträgers (1) erzeugt wird.

12. Verfahren nach Anspruch 11, dadurch gekennzeichnet, dass die Datenspur (3) und die Deckschicht (4) durch Auftragen von Suspensionen auf eine Unterlage (2) des Datenträgers (1) erzeugt werden.

0167898

FIG. 1

FIG. 2

FIG. 3

FIG. 4

FIG. 5